# EUROPEAN PATENT APPLICATION

(11) **EP 2 887 479 A1**
(43) Date of publication of application: **24.06.2015**
(21) Application number: 13198130.0
(22) Date of filing: 18.12.2013
(51) Int. Cl.: H02G 3/38

(54) **Tile to be applied on a building surface and method for installing cables in a building**

(71) Applicant: Tarkett GDL S.A., 9779 Lentzweiler (LU)
(72) Inventor: REITHLER, Christophe, 9559 Luxembourg (LU)
(74) Representative: Tischner, Oliver

(57) **Abstract**

The invention concerns a tile to be applied on a surface of a building, comprising:
- a tile body having a first surface (3) and a second surface (5) opposite to the first surface,
- at least one edge (7a, 7b, 7c, 7d) connecting the first and second surfaces, and
- at least one group of grooves (9, 10, 12, 14) comprising at least one groove (18), wherein each groove is adapted for holding and retaining a cable (41, 44a, 44b, 44c), wherein the at least one groove of a group of grooves is provided in the first surface and is extending from one of the edges across the first surface (3) of the tile (1).

## Description

The present invention generally relates to a tile. In particular the invention relates to tile to be applied on a surface of a building. The tile comprises a tile body having a first surface and a second surface opposite to the first surface and at least one edge connecting the first and second surfaces. Further, the present invention relates to a method for installing cables in a building.

In office buildings, cable management is a rather complicated issue. Each desk has to be provided with one or more accesses to power sockets, to computer network sockets and to telephone sockets. A high entanglement of cables may be a mess in the rooms. Further, to have access to a socket close to electric devices may be also difficult. Further, the cable management can be one of the major cost factors when an office is moving.

Presently, several solutions exist. For example in offices have a double floor wherein the cables are arranged between an upper layer and a lower layer of the floor. On the upper layer of the floor carpets or other decorative floor covering is applied. Some openings in the upper layer of the floor are provided to have access to the power and network cables. This solution is costly and the openings in the upper layer of the floor have fixed locations. Thus, the desks and other electronic devices needing an access to a power socket or network sockets can only be provided at specific locations predefined by the openings.

Also other solutions have been proposed, for example in US 3,553,675 or US 2002/0125038 A1 in which a floor covering has been provided, which includes several layers of conducting material. A pin is pierced into the floor covering for contacting the respective contacting layers so that an electrical device being connected to the pin may be powered using the floor covering.

However, such a floor covering is expensive to produce and needs for each device a specific adaptor. If the floor covering is worn after a couple of years it has to be exchanged including the conducting layers provided in the floor covering. Further, in case of a short circuit in the floor, the complete floor covering has to be replaced as it would be complicated to repair such a floor covering.

Object of the invention is to provide a system for providing sockets for electricity and networks at any desired location on building surface, for example a floor or a wall, which is easy to install and maintain.

According to the invention, a tile to be applied on a surface of a building, comprising:
- a tile body having a first surface and a second surface opposite to the first surface,
- at least one edge connecting the first and second surfaces, and
- at least one group of grooves comprising at least one groove, wherein each groove is adapted for holding and retaining a cable, wherein the at least one groove of a group of grooves is provided in the first surface and is extending from one of the edges across the first surface of the tile.

According to further embodiments, the tile may include one or more of the following features:
- the at least one groove of the group of grooves, in particular of each group of grooves, is extending from the at least one edge across the tile to the same or another edge of the tile;
- the at least one edges of the tile is and the group of grooves are formed, such that when two identical tiles are placed adjacent to each other, at least one group of grooves of a second tile continues at least one group of grooves of the first tile, and such that the adjacent edges of the first tile and the second tile have a conforming shape;
- the at least one, in particular all, of the grooves is or are a straight groove;
- each group of grooves comprises at least two grooves, in particular three or four grooves, wherein the grooves within each group the grooves are passing across the tile in parallel to each other;
- at least two groups of grooves, in particular three or four group of grooves, are passing across the tile in parallel to each other and/or wherein at least two groups of grooves are intersecting each other at an intersection, in particular at an angle between 30 and 120 degrees, for example between an angle of 30 to 60 degrees or 80 to 100 degrees respectively;
- at least two adjacent groups of grooves have a distance of at least 10 cm, in particular 15 cm from each other;
- each groove has a diameter of 0.3 to 1.5 cm;
- at least one predetermined section of the tile is prepared to be removed, such that the tile presents a cutout after the removal, in particular for mounting a socket, wherein the predetermined section is crossed or reached by a group of grooves, wherein the predetermined section is provided in particular at an intersection of two groups of grooves;
- the thickness of the tile, between the first surface and the second surface is between 0.5 and 3cm, in particular between 1 cm and 2 cm;
- the first surface of the tile is rectangular, in particular has a quadratic form; and/or
- the tile further comprises connecting portions at at least one edge, in particular at corners where two edges meet each other, for connecting two adjacent tiles, wherein the connecting portions are adapted to receive a connection device for holding and retaining the two adjacent tiles together, wherein, in particular, the connection device is a bayonet coupling.

Further, the present invention relates to a floor covering comprising: at least one tile according to an embodiment disclosed herein, and a decorative layer, in particular a carpet, provided on the first surface.

Further, the present invention relates to a method for installing cables in a building comprising:
applying at least one first tile according to an embodiment disclosed herein to a surface of a building so that the second surface of the tile is directed to the surface of the building;
providing at least one cable or wire in at least one of the grooves of the tile; and applying a decorative layer on the tile.

According to further embodiments, the method may comprise one or more of the following features:
- applying at least one second tile according to an embodiment disclosed herein to the surface of the building adjacent to the at least one first tile, such that at least one group of grooves of the at least one second tile continues at least one group of grooves of the at least one first tile, and
   connecting the at least one second tile to the at least one first tile by fixing a connection device to the respective adjacent connecting portions of the tiles.
- before applying the decorative layer on the tile, removing at least one predetermined section such that the tile presents a cutout, and
   mounting a socket in the cutout; and/or
- the surface of the building is a floor or a wall of the building.

According to the invention the costs for the installation of cables and any relocation of power or network sockets is substantially reduced. Further, the room planning is improved due to more flexibility of the location of the socket for connecting a power grid or a computer network. Further, the wire or cables provided in the grooves may be easily removed from the tiles, for example for relocating the cables or wires.

So that the manner in which the above recited features of the present invention can be understood in detail, a more particular description of the invention, briefly summarized above, may be read by reference to embodiments. The accompanying drawings relate to embodiments of the invention and are described in the following:
- figure 1 shows a perspective schematic view of a tile according to the invention,
- figure 2 shows schematically a top view of the tile according to the embodiment of figure 1,
- figure 3 shows an enlarged perspective view of a portion of a tile according to figure 1,
- figure 4 shows the enlarged portion of figure 3 provided with some cables in the grooves of the tile,
- figure 5 shows a schematic perspective view of portions of four tiles with their respective adjacent connecting portions and a connecting device for connecting them,
- figures 6a and 6b show in a perspective bottom view and a perspective top view the holding device of figure 5 applied to the connecting portions of the adjacent tiles,
- figures 7 and 7b show a perspective bottom view and a perspective top view of the connection of the tiles according to figures 6a and 6b wherein a screw has been applied to the connection device,
- figures 8, 9, 10, 11, 12, 13 and 14 show schematically in a perspective view the different steps for providing a socket to a tile according to the invention,
- figure 15 show a power cable socket installed on a tile according to the invention, and
- figure 16 shows a network socket provided to a tile according to the invention.

Throughout the figures, the same features are designated with the same reference numbers.

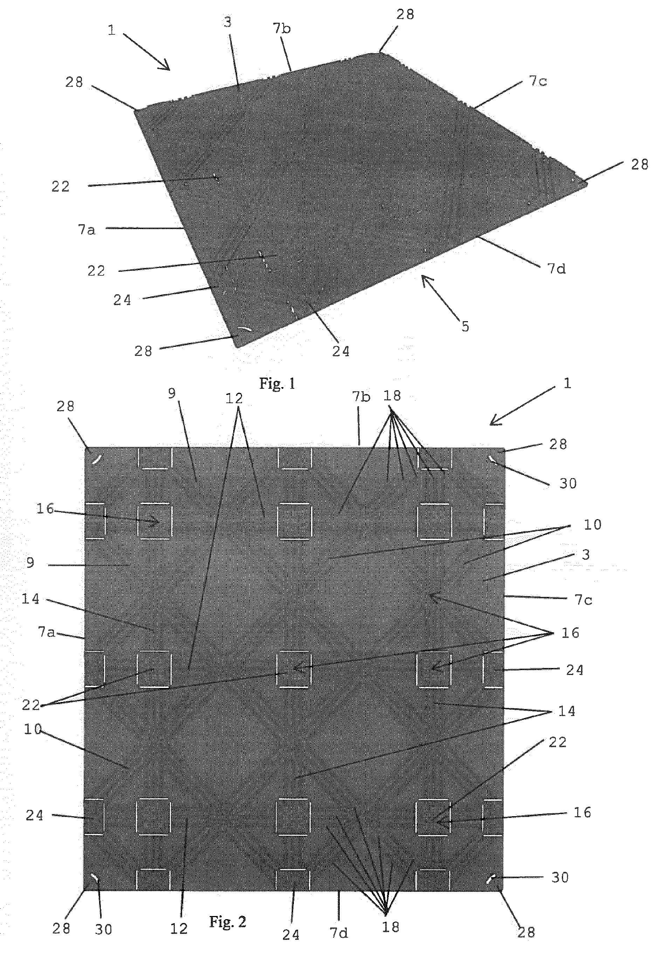

Figure 1 shows a tile 1 according to an embodiment according to the invention in a perspective view. Figure 2 show the same tile 1 in a top view. The tile has a body having a first, upper surface 3 and a second lower surface 5 opposite to the first surface 3 which are substantially parallel to each other. The second surface 5 is substantially flat and adapted to be applied to a surface of a building. In an embodiment the surface of the building is a floor or a wall of the building. The thickness of the tile is between 5 to 20mm The body of the tile may be made of thermoplastic polymer.

The tile 1 has four straight edges 7a, 7b, 7c, 7d connecting the upper surface 3 with the lower surface 5. At each corner of the tile 1, two of the edges 7a, 7b, 7c, 7d are contacting or meeting each other in a substantially orthogonal angle. In an embodiment, the edges 7a, 7b, 7c, 7d have length between 30 cm and 1 meter, for example between 40 cm and 70 cm. In a particular example, the edges 7a, 7b, 7c, 7d have substantially the same length so that the tile 1 has a quadratic form.

In other embodiment, the tile may have other forms. For example the tile may have a rectangular form with respectively two edges having the same length or may have a hexagonal, triangular, trapezoidal form, so that the tile has more or less than four, in particular straight edges and respectively two edges are contacting each other at the corners at an angle being different to 90 degrees.

The form or forms of the tile 1 are selected, such that no empty space between the tiles may show up, when a complete surface of a building is to be covered with them.

In further embodiments, two or three different forms of tiles may be used for that purpose. According to an embodiment, the edges may be curved.

The first surface 3 includes a plurality of groups of grooves 9, 10, 12, 14. Each group of grooves extends from one edge 7a, 7b, 7c, 7d straight to another edge 7a, 7b, 7c, 7d across the first surface 3 of the tile 1. In other embodiments, the group of grooves may extend not in the straight manner across the tile 1 but may have curved form and/or may start and end at the same edge 7a, 7b, 7c, 7d.

In further embodiments, at least some of the group of grooves may end within the first surface 3, i.e. not at an edge 7a, 7b, 7c, 7d at a portion provided to receive a socket as it will be explained later.

At least two groups of grooves 12, 14 may extend in parallel to the edges. For example, two groups of grooves extending in parallel to the edges may cross each other at an intersection with an angle of between 80 and 100 degrees, in case the contacting edges 7a, 7b, 7c, 7d have an angle of 90 degrees between them. In other words, the angle may be different in case the angle between the contacting adjacent edges is different. In an embodiment, at least two groups of grooves 9, 10 may extend in a diagonal or oblique manner across the first surface 3, so that they form oblique group of grooves. In other words, the oblique groups of grooves are oblique with respect to the edges 7a, 7b, 7c, 7d. For example, the oblique group of grooves may have an angle of between 30 and 60 degrees to the edges 7a, 7b, 7c, 7d. Two oblique groups of grooves extending in parallel to the edges may cross each other at an intersection, for example with an angle of about 80 to 100 degrees.

As shown in the drawings, both, oblique and parallel groups of grooves may be provided in the first surface such that a network of groups of grooves is formed having a plurality of intersections 16 between them. Further, for forming a dense network of group of grooves, several group of grooves, for example at least two or three group of grooves 9, 10, 12, 14, are extending in parallel to each other across the first surface 3 of the tile 1.

In an embodiment, which may be combined with other embodiments disclosed herein, the adjacent group of grooves 9, 10, 12, 14 extending in parallel to each other are spaced part by a distance of about 10 cm to 30 cm. For example, the distance between two adjacent groups of grooves is at least 10 to 15 cm.

Each group of grooves 9, 10, 12, 14 includes at least one groove 18, for example two to four grooves 18 arranged in parallel to each other. In other words, the grooves 18 of each group of grooves 9, 10, 12, 14 extend in parallel across the first surface 3 of the tile 1.

Each groove 18 has a size to accommodate a cable, for example a power cable or a network cable. The size of the grooves is adapted, such that a power wire or cable or a network cable can be completely inserted into the groove 18, so that the wire or cable inserted into the groove 18 does not protrude from the first surface 3.

In an embodiment, the diameter of each groove 18 is between 0.3 cm and 1.5 cm. Further, the depth of each groove is also between 0.3 cm and 1.5 cm. Each groove 18 of a group of grooves 9, 10, 12, 14 have for example substantially the same diameter. In a further embodiment all grooves on a tile 1 may have the same diameter. The distance between the adjacent grooves 18 within a group of grooves 9, 10, 12, 14 is between 0.5 and 3 cm, in particular between 1 cm and 2 cm. Further, in an embodiment, each adjacent pair of grooves 18 of a group of grooves 9, 10, 12, 14 have substantially the same distance between them.

For retaining a cable in the respective groove 18, each grove has at least one flexible nose 20 at an upper end of the groove, close to the first surface 3. The flexible noses 20 may be provided at regular intervals in the grooves.

In an embodiment, the groves have a substantially rectangular or U shaped cross section.

Further, in an embodiment, which may be combined with other embodiments disclosed herein, a tile may comprise at least one removable portion 22, 24 so that the tile presents a cutout after removal of that removable portion 22, 24. The removable portions 22, 24 are placed across the tile, such that respectively at least one group of grooves 9, 10, 12, 14 traverses or ends at each removable portion 22, 24.

First removable portions 22 are provided to install a socket interface (data socket, power socket etc.) and second removable portions 24 are provided to install a connector block for connecting the building infrastructure to the tile 1. In other words, the second removable portions 24 are removed, when cables provided in the grooves 18 ending at the second removable portions 24 have to be connected to the building cable infrastructure. Therefore, preferably, the second removable portions 24 are placed adjacent to or at the edges 7a, 7b, 7c, 7d of the tile 1.

For example, the first and second removable portions 22, 24 have a substantially rectangular or quadratic form. In an embodiment, the lengths of the edges of the removable portions are between 2 and 7 cm. In other embodiments, the first and second removable portions may have another form, for example they may be circular, oval, be a half circle or a half oval.

The removable portion 22, 24 are connected to the rest of the body of the tile 1 with a plurality of bridges 26, for example at each corner of the respective removable portion 22, 24. For example each removable portion may be connected with at least two bridges to the rest of the body of the tile. The bridges 26 may be cut by a knife or a scissor to remove the removable portion 22, 24.

The first removable portions 22 are regularly distributed about the first surface 3 of the tile 1. For example, the first removable portions 22 are provided in a spaced part relationship with distance between 10 cm and 40 cm, in particular between 10 and 30 cm. In an embodiment, which may be combined with other embodiments disclosed herein, the first removable portions 22 are provided at intersections between two groups of grooves 9, 10, 12, 14, for example at the intersections of the group of grooves 9, 10, 12, 14 being in parallel to the edges 7a, 7b, 7c, 7d of the tile 1.

Further, each tile 1 may include a plurality of connecting portions 28 which are provided to connect one tile with another adjacent tile. For example, in the embodiment shown in the figures, a connecting portion 28 is provided at each corner where respectively two edges 7a, 7b, 7c, 7d meet each other. The tile 1 may comprise also further connecting portions at the edges, in particular at regularly spaced intervals. The number of connecting portions 28 and the location thereof depends on the form of the tile. In other words, each tile should comprise enough connecting portions 28 to be able to be connected to each adjacent tile.

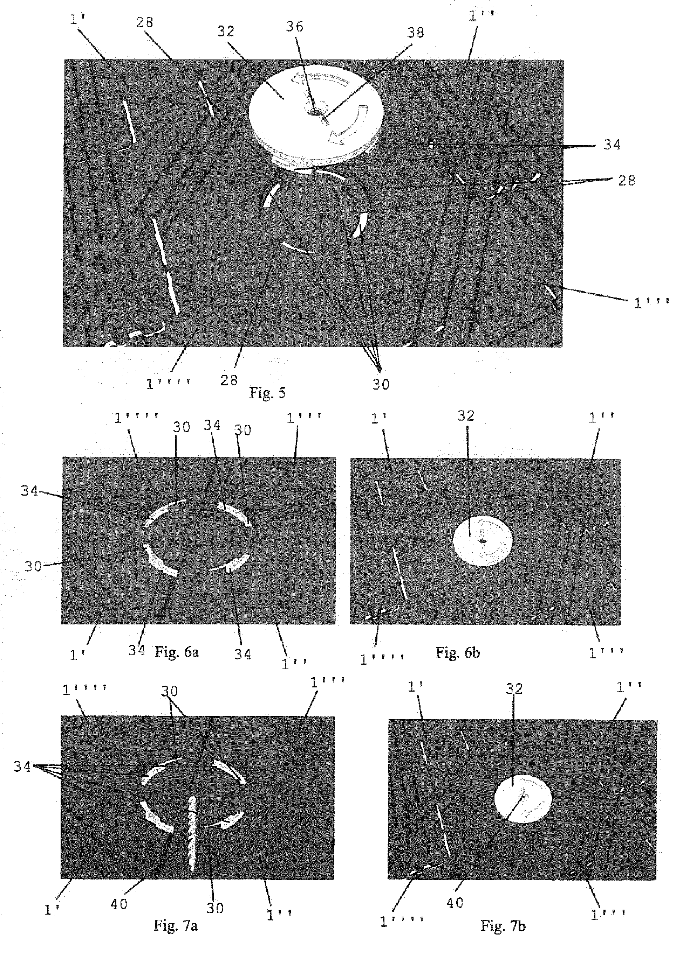

According to an embodiment, each connecting portion 28 includes at least one hole or cutout 30, which has in an embodiment the form of segment of a circle. The cutouts 30 are provided to receive a connection device 32 as shown in figures 5 to 7b. The connecting portions 28 are depressed or lowered, such that a connection device 32 received in the connecting portions 28 smoothly continuous the first surface 3 of the respective adjacent tiles 1. For example, if the connection device 32 has a circular form, the depressed connecting portions 28 have also a corresponding form of a circular section.

Figure 5 shows the connection device 32 which has a circular form and which includes a plurality of hooks 34 at its lower side. The hooks 34 are regularly spaced apart and form together with the cutouts 30 of the connecting portions a bayonet joint or connection. Thus, in case the adjacent tiles 1', 1", 1"', 1"" are placed against each other, as shown in figure 5 with four tiles, the combination of the respective connecting portions 28 of the tiles 1', 1 ", 1"', 1"" has a form corresponding to the form connection device 32, here a circle. Further, in a typical embedment, the combination of the respective connecting portions 28 of the tiles has at least the same number of cutouts 30 as the number of hooks 34 of the connection device 34. Further the cutouts 30 are placed at the corresponding locations, so that each hook 34 can be inserted in a corresponding cutout 30. In an embodiment, each connecting portion 28 of a tile is provided with at least one cutout 30.

As shown in Figures 7a and 7b, according to an embodiment, the connection device 32 includes a hole 36 for providing a screw 40 into the hole such that the connection device 32 can be fixed to the surface of the building on which the tiles 1', 1 ", 1"', 1"" are placed. Further, the connection device 32 comprises a slit 38 for rotating in the connection device 32 with a screw driver.

In other embodiments, which may be combined with embodiments disclosed herein, a connection device, for example a hook, may be integrated into the body of the tile.

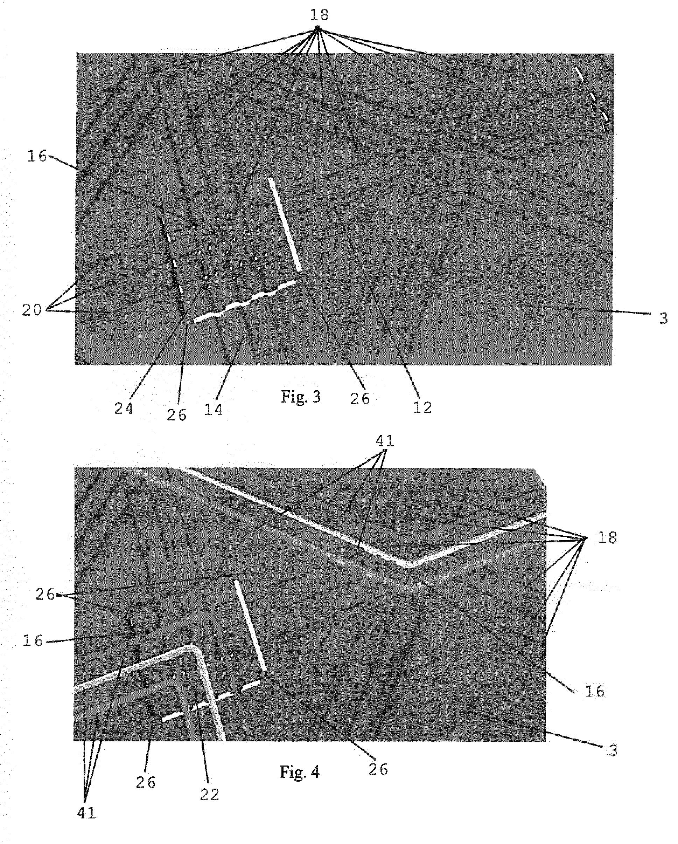

In the following, the usage of the tiles will be explained. The tiles are distributed on a surface of a building, such that they abut each other and form a continuous surface. Then, for example a second removable section 24 is removed for providing a connection to the building infrastructure. Subsequently, as it is shown in figure 4, the cables 41 are inserted in the grooves 18. The direction of the cables 41 may be changed at each of the intersections 16. The cables 41 are retained on the tiles with the noses 20. In an embodiment, the cables are insulated cables for providing power or data to devices. For example, a power cable may be able to support a voltage between 50 and 250V.

When all tiles have been placed on the floor, prior or after placing the cables into the grooves, the connection devices 32 may inserted in the respective connecting portions 28 so that the hooks 34 of the connection device 32 are inserted in the respective cutouts 30. Subsequently the connection device 32 is rotated in a first direction so that the connection device 32 cannot be lifted. Then, all the tiles connected by the connection device 32 are retained together. This can be seen in figures 6a and 6b.

Then, the connection device 32 is secured to the surface of the building with the screw 40. Thus, the tiles 1', 1 ", 1"', 1"" are not only fixed with respect to each other, but also with respect to the surface of the building. This is shown in figures 7a and 7b.

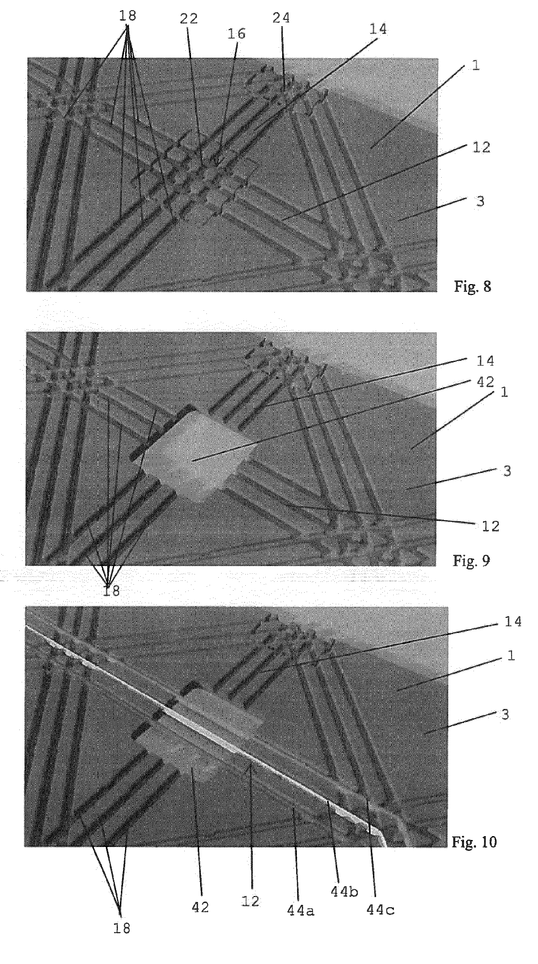

Figures 8 to 14 show the mounting of a socket to the tile 1 at one first removable portions 22 being provided for the socket. In figure 8, the tile 1 is shown with the first removable section 22 in place. In a next step, shown in figure 9, the removable section 22 is removed so that the tile 1 presents a cutout 42. Then, in further step, a plurality of cables 44a, 44b, 44c is inserted into the grooves of the group of grooves 12. As it can be seen from figure 10, the cables 44a, 44b, 44c do not extend beyond the first surface 3 of the tile 1. Further, the cables 44a, 44b, 44c cross the cutout 42 provided for the socket. For example, they pass completely across the cutout 42. In other embodiments, the cables 44a, 44b, 44c may end at the cutout 42 provided for the socket or may change the direction at the cutout 42 provided for the socket.

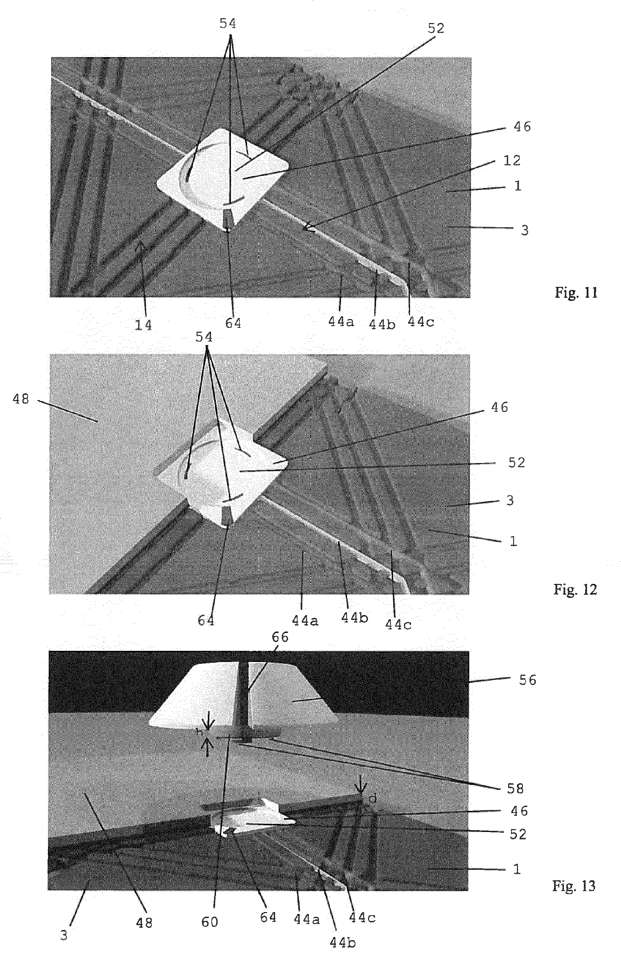

The socket comprises two parts, a lower part being fixed to the tile and an upper part which is fixed to the lower part and which extends above a decorative surface layer to be provided on the tile 1. This is shown in more detail in the figures 11 to 14.

In figure 11, the lower part 46 is inserted into the cutout 42 of the tile 1. In an embodiment, the lower part 46 may be fixed or locked to the surface of the building, for example using a screw or another fixation device, and/or it may be fixed or locked to the tile 1, for example with a snap connection.

After the lower part 46 has been mounted to the tile 1, a decorative layer 48 is provided on the tile of the tiles 1. The decorative layer 48 may be in an embodiment a carpet. However, also other decorative layers 48 may be placed on the tiles 1, for example parquet flooring, or linoleum. The decorative layer 48 is provided with a respective cutout 50 at the site of the lower part 46 of the socket (see figure 12).

The lower part 46 of the socket has a depressed portion 52 having a substantial circular form and a plurality of regularly circumferentially spaced apart slits 54 having the form of a section of a circle. In figures 11 and 12, three slits 54 are shown, however the lower part 46 of the socket may comprise more or less slits 54. The slits are provided for a bayonet connection between the upper part 56 of the socket and the lower part 46 of the socket. The connection between the upper part 56 and the lower part 46 of the socket may be also provided by other connection devices and may have also other forms. For example the connection device and the depressed portion 52 may be rectangular.

As it is shown in figure 13, the upper part of the socket 56 has accordingly respective hooks 58 which have to be engaged in the slits 54 of the lower part 46 of the socket. The upper part 56 of the socket has a circular central portion 60 which projects from an abutting layer 62 to be placed on the upper surface of the decorative layer 48, so that the projecting central portion 60 on which the hooks 58 of the connection device has a projection height h corresponding to the thickness d of the decorative layer 48. The diameter of the circular projecting central portion 60 corresponds to the diameter of the depressed portion 52.

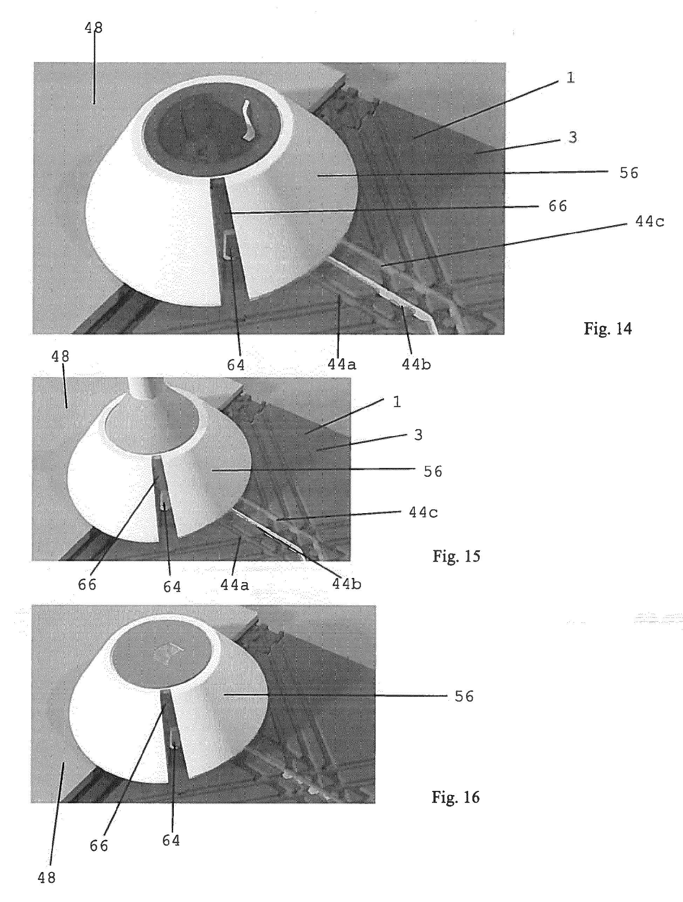

Then, the upper part 56 of the socket is connected to the lower part 46 using the bayonet connection 54, 58. A visual indication 64 on the lower part and a visual cutout portion 66 in the upper part 56 of the socket are aligned with respect to each other, as it is shown in figure 14, so that the user knows, when the upper part 56 of the socket is correctly fixed to the lower part 46 of the socket.

In that position, the upper part 56 may be locked to the lower part 46. For example, the visual indication 64 may be biased upwards, like a spring, so that when the upper part 56 is in the correct position, the visual indication 64 engages the cutout portion 66 and prevent a rotation of the upper part 56 with respect to the lower part 56 of the socket.

In other embodiments, a separate biasing device may be used for that purpose. Alternatively, also a snap connection may be used, wherein the upper or the lower part 46, 56 includes a snap arm and the other part the corresponding snap arm or hole.

In some embodiments, the lower part 46 may be additionally fixed to the surface of the building, for example using a screw or another fixing device, so that the lower part is fixed to the surface of the building.

Alternatively, a screw may be provided through both, the upper and the lower part 46, 56, so that both parts are fixed with the screw or another fixing means to the surface of the building.

In figures 15 and 16 a power cable socket and a network socket are shown, each may be mounted in substantive the same manner as the socket of figure 14.

As the first removable sections 22 on the tile are regularly distributed about the tile 1, the socket(s) may be placed at an arbitrary location on the floor. Thus, a more flexible room planning is enabled with the present invention. In other words, a desk and other equipment may be placed anywhere and can be instantly connected to the electrical or computer networks.

## Claims

1. Tile (1, 1', 1 ", 1"', 1"") to be applied on a surface of a building, comprising:
- a tile body having a first surface (3) and a second surface (5) opposite to the first surface,
- at least one edge (7a, 7b, 7c, 7d) connecting the first and second surfaces, and
- at least one group of grooves (9, 10, 12, 14) comprising at least one groove (18), wherein each groove is adapted for holding and retaining a wire or a cable (41, 44a, 44b, 44c), wherein the at least one groove of a group of grooves is provided in the first surface and is extending from one of the edges across the first surface (3) of the tile (1).

2. Tile according to claim 1, wherein the at least one groove (18) of the group of grooves, in particular of each group of grooves, is extending from the at least one edge across the tile to the same or another edge (7a, 7b, 7c, 7d) of the tile.

3. Tile according to claim 1 or 2, wherein
the at least one edges (7a, 7b, 7c, 7d) of the tile is and the group of grooves (9, 10, 12, 14) are formed, such that when two identical tiles are placed adjacent to each other, at least one group of grooves of a second tile continues at least one group of grooves of the first tile, and such that the adjacent edges (7a, 7b, 7c, 7d) of the first tile and the second tile have a conforming shape.

4. Tile according to one of the preceding claims, wherein the at least one, in particular all, of the grooves (18) is straight groove.

5. Tile according to one of the preceding claims, wherein each group of grooves (9, 10, 12, 14) comprises at least two grooves (18), in particular three or four grooves, wherein the grooves (18) within each group the grooves are passing across the tile in parallel to each other.

6. Tile according to one of the preceding claims, wherein at least two groups of grooves, in particular three or four group of grooves, are passing across the tile in parallel to each other and/or wherein at least two groups of grooves are intersecting each other at an intersection (16), in particular at an angle between 30 and 120 degrees, for example between an angle of 30 to 60 degrees or 80 to 100 degrees respectively.

7. Tile according to one of the preceding claims, wherein at least two adjacent groups of grooves (9, 10, 12, 14) have a distance of at least 10 cm, in particular 15 cm from each other.

8. Tile according to one of the preceding claims, wherein each groove (18) has a diameter of 0.3 to 1.5 cm.

9. Tile according to one of the preceding claims, wherein at least one predetermined section (22, 24) of the tile is prepared to be removed, such that the tile presents a cutout after the removal, in particular for mounting a socket, wherein the predetermined section is crossed or reached by a group of grooves (9, 10, 12, 14), wherein the predetermined section is provided in particular at an intersection (16) of two groups of grooves (9, 10, 12, 14).

10. Tile according to one of the preceding claims, wherein the thickness of the tile, between the first surface and the second surface is between 0.5 and 3cm, in particular between 1 cm and 2 cm.

11. Tile according to one of the preceding claims wherein the first surface (3) of the tile (1) is rectangular, in particular has a quadratic form.

12. Tile according to one of the preceding claims, further comprising connecting portions (28) at at least one edge (7a, 7b, 7c, 7d), in particular at corners where two edges meet each other, for connecting two adjacent tiles, wherein the connecting portions (28) are adapted to receive a connection device (32) for holding and retaining the two adjacent tiles (1, 1', 1", 1"', 1"") together, wherein, in particular, the connection device is a bayonet coupling.

13. Floor covering comprising:
at least one tile according to one of the preceding claims, and
a decorative layer (48), in particular a carpet, provided on the first surface (3).

14. Method for installing cables in a building comprising:
applying at least one first tile (1, 1', 1 ", 1"', 1"") according to one of the preceding claims to a surface of a building so that the second surface (5) of the tile is directed to the surface of the building;
providing at least one cable (41, 44a, 44b, 44c) or a wire in at least one of the grooves of the tile; and
applying a decorative layer (48) on the tile.

15. Method according to claim 14, further comprising:
applying at least one second tile (1, 1', 1 ", 1"', 1"") according to one of the claims 1 to 12 to the surface of the building adjacent to the at least one first tile, such that at least one group of grooves (9, 10, 12, 14) of the at least one second tile continues at least one group of grooves of the at least one first tile, and
connecting the at least one second tile to the at least one first tile by fixing a connection device (32) to the respective adjacent connecting portions (28) of the tiles.

16. Method according to claim 14 or 15, further comprising:
before applying the decorative layer on the tile, removing at least one predetermined section (22, 24) such that the tile presents a cutout (42), and
mounting a socket (46, 56) in the cutout.

17. Method according to one of the claims 14 to 16, wherein the surface of the building is a floor or a wall of the building.

## Amended claims

### Amended claims in accordance with Rule 137(2) EPC.

1. Tile (1, 1', 1", 1"', 1"") to be applied on a surface of a building, comprising:
- a tile body having a first surface (3) and a second surface (5) opposite to the first surface,
- at least one edge (7a, 7b, 7c, 7d) connecting the first and second surfaces, and
- at least one group of grooves (9, 10, 12, 14) comprising at least one groove (18), wherein each groove is adapted for holding and retaining a wire or a cable (41, 44a, 44b, 44c), wherein the at least one groove of a group of grooves is provided in the first surface and is extending from one of the edges across the first surface (3) of the tile (1), **characterized in that** at least one predetermined section (22, 24) of the tile is prepared to be removed, such that the tile presents a cutout after the removal, wherein the predetermined section is crossed or reached by a group of grooves (9, 10, 12, 14), wherein the predetermined section is connected to the rest of the tile body with a plurality of bridges to be cut for removing the predetermined section.

2. Tile according to claim 1, wherein the at least one groove (18) of the group of grooves, in particular of each group of grooves, is extending from the at least one edge across the tile to the same or another edge (7a, 7b, 7c, 7d) of the tile.

3. Tile according to claim 1 or 2, wherein
the at least one edges (7a, 7b, 7c, 7d) of the tile is and the group of grooves (9, 10, 12, 14) are formed, such that when two identical tiles are placed adjacent to each other, at least one group of grooves of a second tile continues at least one group of grooves of the first tile, and such that the adjacent edges (7a, 7b, 7c, 7d) of the first tile and the second tile have a conforming shape.

4. Tile according to one of the preceding claims, wherein the at least one, in particular all, of the grooves (18) is straight groove.

5. Tile according to one of the preceding claims, wherein each group of grooves (9, 10, 12, 14) comprises at least two grooves (18), in particular three or four grooves, wherein the grooves (18) within each group the grooves are passing across the tile in parallel to each other.

6. Tile according to one of the preceding claims, wherein at least two groups of grooves, in particular three or four group of grooves, are passing across the tile in parallel to each other and/or wherein at least two groups of grooves are intersecting each other at an intersection (16), in particular at an angle between 30 and 120 degrees, for example between an angle of 30 to 60 degrees or 80 to 100 degrees respectively.

7. Tile according to one of the preceding claims, wherein at least two adjacent groups of grooves (9, 10, 12, 14) have a distance of at least 10 cm, in particular 15 cm from each other.

8. Tile according to one of the preceding claims, wherein each groove (18) has a diameter of 0.3 to 1.5 cm.

9. Tile according to one of the preceding claims, wherein the cutout is provided for mounting a socket, and/or wherein the predetermined section is provided in particular at an intersection (16) of two groups of grooves (9, 10, 12, 14).

10. Tile according to one of the preceding claims, wherein the thickness of the tile, between the first surface and the second surface is between 0.5 and 3cm, in particular between 1 cm and 2 cm.

11. Tile according to one of the preceding claims wherein the first surface (3) of the tile (1) is rectangular, in particular has a quadratic form.

12. Tile according to one of the preceding claims, further comprising connecting portions (28) at at least one edge (7a, 7b, 7c, 7d), in particular at corners where two edges meet each other, for connecting two adjacent tiles, wherein the connecting portions (28) are adapted to receive a connection device (32) for holding and retaining the two adjacent tiles (1, 1', 1", 1"', 1"") together, wherein, in particular, the connection device is a bayonet coupling.

13. Floor covering comprising:
at least one tile according to one of the preceding claims, and
a decorative layer (48), in particular a carpet, provided on the first surface (3).

14. Method for installing cables in a building comprising:
applying at least one first tile (1, 1', 1", 1"', 1"") according to one of the preceding claims to a surface of a building so that the second surface (5) of the tile is directed to the surface of the building;
providing at least one cable (41, 44a, 44b, 44c) or a wire in at least one of the grooves of the tile; and
applying a decorative layer (48) on the tile.

15. Method according to claim 14, further comprising:
applying at least one second tile (1, 1', 1", 1"', 1"") according to one of the claims 1 to 12 to the surface of the building adjacent to the at least one first tile, such that at least one group of grooves (9, 10, 12, 14) of the at least one second tile continues at least one group of grooves of the at least one first tile, and
connecting the at least one second tile to the at least one first tile by fixing a connection device (32) to the respective adjacent connecting portions (28) of the tiles.

16. Method according to claim 14 or 15, further comprising:
before applying the decorative layer on the tile, removing at least one predetermined section (22, 24) such that the tile presents a cutout (42), and
mounting a socket (46, 56) in the cutout.

17. Method according to one of the claims 14 to 16, wherein the surface of the building is a floor or a wall of the building.
